# EUROPÄISCHE PATENTSCHRIFT

(11) **EP 2 783 183 B1**
(45) Veröffentlichungstag und Bekanntmachung des Hinweises auf die Patenterteilung: **24.04.2019**
(21) Anmeldenummer: 12813752.8
(22) Anmeldetag: 07.11.2012
(51) Int. Cl.: F42B 3/103, B60R 21/264

(54) **GASGENERATOR**
GAS GENERATOR
GÉNÉRATEUR DE GAZ

(30) Priorität: 22.11.2011 DE 102011086838
(43) Veröffentlichungstag der Anmeldung: 01.10.2014
(73) Patentinhaber: Joyson Safety Systems Germany GmbH, 63743 Aschaffenburg (DE)
(72) Erfinder: DIVO, Hans-Jürgen, 89129 Langenau (DE); GANSO, Christine-Martina, 89155 Erbach (DE); KLINGAUF, Gerhard, 88481 Balzheim (DE); SCHNABL, Roland, 89075 Ulm (DE); BENZ, Jochen, 89077 Ulm (DE)
(74) Vertreter: Fischer, Uwe
(86) Internationale Anmeldenummer: PCT/DE2012/200073
(87) Internationale Veröffentlichungsnummer: WO 2013/075710

(56) Entgegenhaltungen:
- EP-A1- 1 217 325
- EP-A1- 1 674 334
- EP-A1- 1 674 334
- WO-A2-2009/043904
- DE-U1- 20 216 611
- DE-U1- 20 216 611
- DE-U1- 20 300 500
- DE-U1- 20 300 500
- US-A1- 2007 273 131
- US-A1- 2010 096 844

## Beschreibung

Die Erfindung bezieht sich auf eine Fahrzeugsicherheitseinrichtung mit einem Gasgenerator.

Fahrzeugsicherheitseinrichtungen mit Gasgeneratoren sind beispielsweise aus den Druckschriften DE 10 2008 008 041 A1, EP 1 217 325 A1, WO 2009/043904 A2, US 2010/096844 A1, EP 1 674 334 A1, DE 203 00 500 U1 und US2007/273131 A1 bekannt. Die vier letztgenannten Druckschriften zeigen Gasgeneratoren mit daran angebrachtem Zuführungsrohr.

Die Druckschrift DE 202 16 611 U1 offenbart eine Fahrzeugsicherheitseinrichtung, bei der ein Rohr eines Gasgenerators und ein Zuführungsrohr ineinander geschoben sind. Das innere Rohr ist an seinen mit dem äußeren Rohr in Verbindung stehenden Endabschnitt umgebördelt und dadurch doppelwandig.

Erfindungsgemäß ist eine Fahrzeugsicherheitseinrichtung mit den Merkmalen gemäß Patentanspruch 1 vorgesehen. Vorteilhafte Ausgestaltungen der erfindungsgemäßen Fahrzeugsicherheitseinrichtung sind in Unteransprüchen angegeben.

Bei der Fahrzeugsicherheitseinrichtung handelt es sich vorzugsweise um einen Strafferantrieb für einen Gurtaufroller eines Sicherheitsgurts, wobei der Strafferantrieb umfasst: einen Gasgenerator, eine Antriebseinrichtung (z. B. in Form eines Antriebsrads) und ein Zuführungsrohr, das den Gasgenerator und die Antriebseinrichtung verbindet, wobei in dem Zuführungsrohr ein oder mehrere Schubglieder vorhanden sind, die nach einem Auslösen des Gasgenerators beschleunigt werden und die Antriebseinrichtung zum Aufwickeln des Sicherheitsgurtes mittelbar oder unmittelbar antreiben.

Alternativ kann es sich bei der Fahrzeugsicherheitseinrichtung um einen Strafferantrieb für einen Schlossstraffer oder eine Airbageinrichtung (Airbag: Luftsack) handeln.

Das Rohr des Gasgenerators und das Zuführungsrohr sind vorzugsweise mittels einer Pressverbindung miteinander verbunden.

Gemäß einer besonders bevorzugten Ausgestaltung ist vorgesehen, dass das Wandmaterial eines der beiden Rohre, nämlich das des äußeren Rohres, in mindestens eine vorgeprägte (z. B. um 360 Grad) umlaufende Nut des inneren Rohres unter Bildung eines Hinterschnitts eingepresst ist.

Vorzugsweise ist an mindestens drei, vorzugsweise sechs, voneinander getrennten Kreisbogenabschnitten das Wandmaterial des äußeren Rohres in die vorgeprägte umlaufende Nut des inneren Rohres eingeprägt. Die Kreisbogenabschnitte sind bevorzugt drehsymmetrisch am Umfang des äußeren Rohres angeordnet.

Bei dem äußeren Rohr handelt es sich vorzugsweise um das Rohr des Gasgenerators und bei dem inneren Rohr um das Zuführungsrohr.

Gemäß einer anderen bevorzugten Ausgestaltung ist vorgesehen, dass in die gesamte um 360 Grad umlaufende Nut des inneren Rohres Wandmaterial des äußeren Rohres eingepresst ist. Dabei wird vorzugsweise eine um 360 Grad umlaufende Nut auch in dem äußeren Rohr gebildet. Das Einpressen des Wandmaterials erfolgt vorzugsweise durch Rollen.

Um eine besonders große Stabilität im Verbindungsbereich zu erreichen, wird es als erfindungsgemäß angesehen, wenn das innere Rohr an seinem mit dem äußeren Rohr in Verbindung stehenden Endabschnitt eine größere Wandstärke als in seinem sich daran anschließenden mittleren Rohrabschnitt aufweist. Erfindungsgemäß ist das innere Rohr an seinem mit dem äußeren Rohr in Verbindung stehenden Endabschnitt gestaucht, um die beschriebene Dickenerhöhung zu erreichen. Die Dickenerhöhung beträgt vorzugsweise zwischen 10% und 30% der normalen Wandstärke des inneren Rohres.

Um die Stabilität zu erhöhen, kann außerdem vorgesehen sein, dass das innere Rohr im Bereich seines Rohrendes aufgeweitet ist und an seinem Rohrende einen größeren Durchmesser aufweist als in seinem mittleren Rohrbereich zwischen den beiden Rohrenden. In dem Überlappungsbereich zwischen dem Rohrende des inneren Rohres und dem Rohrende des äußeren Rohres ist der Durchmesser des äußeren Rohres vorzugsweise an den Durchmesser des inneren Rohres angepasst, beispielsweise indem das äußere Rohr auf das innere Rohr aufgepresst, vorzugsweise roll-gepresst, ist.

Das Wandmaterial des äußeren Rohres ist vorzugsweise in mindestens zwei parallele jeweils um 360 Grad umlaufende Nuten des inneren Rohres eingepresst.

Gemäß einer weiteren bevorzugten Ausgestaltung ist vorgesehen, dass das äußere Rohr auf das innere Rohr aufgeschrumpft ist. Ein solches Aufschrumpfen kann erfolgen, indem das äußere Rohr erwärmt und in erwärmtem Zustand auf das innere Rohr aufgeschoben wird und anschließend abgekühlt wird. Durch das Zusammenziehen des äußeren Rohres wird eine feste Verbindung mit dem inneren Rohr erreicht.

Auch wird es als vorteilhaft angesehen, wenn zusätzlich oder alternativ das äußere und das innere Rohr durch eine Bajonettverbindung verbunden sind.

Auch wird es als vorteilhaft angesehen, wenn zusätzlich oder alternativ das äußere und das innere Rohr durch zumindest einen Bolzen verbunden sind, der durch zwei gegenüberliegende Löcher in der Wand des äußeren Rohres und zwei mit diesen fluchtenden Löcher in der Wand des inneren Rohres hindurchgeführt ist.

Der Bolzen ist vorzugsweise an seinen Bolzenenden mit der Wand des äußeren Rohres vernietet oder vertaumelt.

Besonders bevorzugt sind das äußere und das innere Rohr durch zwei Bolzen verbunden, deren Längsachsen vorzugsweise senkrecht zueinander ausgerichtet sind.

An einem Rohrende des Rohres des Gasgenerators wird vorzugsweise eine Anzündeinrichtung mittels eines ein- oder angespritzten Spritzgusskörpers fixiert. Ein Vorteil dieser Spritzgusskörper-Ausführungsform ist darin zu sehen, dass die Anbindung der Anzündeinrichtung an das Generatorgehäuse sehr einfach, nämlich durch Anspritzen erreicht wird, es sind keine mechanischen Biegeschritte, wie beispielsweise Crimpschritte oder dergleichen, notwendig.

Ein weiterer Vorteil der letztgenannten Spritzgusskörper-Ausführungsform ist darin zu sehen, dass die Anbindung der Anzündeinrichtung an das Generatorgehäuse sehr raumsparend möglich ist, da - wie bereits erläutert - keine weiteren mechanischen Verbindungskomponenten zum Crimpen oder dergleichen nötig sind.

Ein weiterer Vorteil der letztgenannten Spritzgusskörper-Ausführungsform besteht darin, dass die Befestigung sehr toleranz-unempfindlich ist, da Größenschwankungen des Rohres des Gasgenerators oder der Anzündeinrichtung automatisch ausgeglichen werden: Ist das Rohr größer oder die Anzündeinrichtung kleiner als üblich, wird der Spritzgusskörper beim Spritzen größer ausfallen als üblich; entsprechendes gilt umgekehrt, wenn das Rohr kleiner oder die Anzündeinrichtung größer als üblich ist, in diesem Falle wird der Spritzgusskörper beim Spritzen kleiner als üblich ausfallen.

Bei dem Gasgenerator handelt es sich vorzugsweise um einen Mikrogasgenerator, besonders bevorzugt um einen integrierten Mikrogasgenerator.

Mit Blick auf eine feste Verbindung der Anzündeinrichtung wird es als vorteilhaft angesehen, wenn die Anzündeinrichtung in dem Rohr an dessen Rohrende eingegossen, eingespritzt und/oder umspritzt ist. Vorzugsweise befindet sich ein innerer Abschnitt des Spritzgusskörpers in dem Rohr und liegt an der Innenseite des Rohres (radial) an. Die Anzündeinrichtung ist in diesem Falle vorzugsweise zum Teil in dem inneren Abschnitt des Spritzgusskörpers eingebettet.

Der Querschnitt des Rohres des Gasgenerators ist vorzugsweise rund, jedoch kann er auch eine andere Form aufweisen, beispielsweise oval oder eckig, beispielsweise quadratisch, rechteckig, usw.

Ein außerhalb des Rohrs befindlicher äußerer Abschnitt des Spritzgusskörpers bildet vorzugsweise eine Hülse, die aus dem Rohr herausgeführte elektrische Anschlusselemente der Anzündeinrichtung seitlich umgibt.

Die Hülse ist bevorzugt derart geformt, dass sie ein mechanisches Schnittstellenelement zum elektrischen Kontaktieren der elektrischen Anschlusselemente der Anzündeinrichtung aufnehmen kann.

Um eine formschlüssige Verbindung zwischen dem Spritzgusskörper und dem Rohr zu ermöglichen, wird es als vorteilhaft angesehen, wenn zwischen dem inneren Abschnitt des Spritzgusskörpers und dem äußeren Abschnitt des Spritzgusskörpers ein mittlerer Abschnitt angeordnet ist, dessen Durchmesser kleiner als der des inneren und des äußeren Abschnitts ist. Der Öffnungsdurchmesser des Rohrs am Rohrende ist vorzugsweise reduziert. Der Durchmesser des mittleren Abschnitts entspricht vorzugsweise dem reduzierten Öffnungsdurchmesser des Rohrs am Rohrende.

Der Verbrennungsraum des Gasgenerators ist vorzugsweise an seinem von der Anzündeinrichtung entfernten Ende mit einer Kappe verschlossen.

Die Kappe weist bevorzugt zumindest einen Aufreißabschnitt, insbesondere zumindest eine Aufreißnaht, auf, der bzw. die nach einem Zünden des Treibstoffs aufgerissen wird und das von dem Treibstoff gebildete Gas aus dem Verbrennungsraum entweichen lässt. Zusätzlich oder alternativ kann die Kappe zumindest eine vorgefertigte Kappenöffnung aufweisen, die nach einem Zünden des Treibstoffs das gebildete Gas aus dem Verbrennungsraum entweichen lässt.

Der Treibstoff ist vorzugsweise auf oder an einer Kappe montiert und/oder in einem separaten Treibstoffbehälter untergebracht, der in den Verbrennungsraum eingeführt ist.

Ein solcher Treibstoffbehälter weist vorzugsweise eine Folie auf oder ist vorzugsweise durch eine Folie gebildet, in der der Treibstoff eingeschweißt ist. Der Treibstoffbehälter kann beispielsweise durch ein Säckchen gebildet sein, das ganz oder zum Teil aus Folie besteht.

Der die Folie aufweisende Treibstoffbehälter ist bevorzugt (bezüglich des darin vorher enthaltenen Gases, also gasseitig) evakuiert. Bei einer solchen Ausgestaltung kann sich die Folie an die den Treibstoff enthaltenden Treibstofftabletten anlegen und somit die Lage der Treibstofftabletten relativ zueinander in dem Treibstoffbehälter fixieren.

Vorzugsweise ist in dem Treibstoffbehälter eine Frühzündladung untergebracht, deren Zündtemperatur kleiner ist als die des Treibstoffs. Die Position der Frühzündladung in dem Treibstoffbehälter ist vorzugsweise derart gewählt, dass die Frühzündladung im Bereich des von der Anzündeinrichtung entfernten Endes des Verbrennungsraumes liegt. Vorzugsweise grenzt die Frühzündladung an die den Verbrennungsraum begrenzende Kappe an; damit ist gemeint, dass sich zwischen Kappe und Frühzündladung vorzugsweise kein Treibstoff befindet.

Vorzugsweise ist die Kappe gut Wärme leitend; die Kappe kann beispielsweise aus Metall bestehen.

Die den Verbrennungsraum verschließende Kappe des Gasgenerators bildet vorzugsweise eine Wand des Treibstoffbehälters. Besonders bevorzugt wird der Treibstoffbehälter durch die Kappe und eine Folie gebildet. Der Treibstoff und die Frühzündladung sind vorzugsweise in der Folie eingeschweißt. Der durch die Kappe und die Folie begrenzte Innenraum ist vorzugsweise evakuiert, so dass die Folie an dem Treibstoff fest anliegt und die Lage des Treibstoffs und/oder die der Frühzündladung fixiert. Die Fixierung erfolgt vorzugsweise derart, dass die Anzündladung an der Kappe anliegt. Die Folie ist vorzugsweise auch außen um die Kappe herumgeführt, um diese einzuschließen.

Die Erfindung bezieht sich außerdem auf ein Verfahren zum Herstellen einer Fahrzeugsicherheitseinrichtung. Erfindungsgemäß ist diesbezüglich vorgesehen, dass ein Rohr eines Gasgenerators und ein Zuführungsrohr ineinander geschoben werden, wobei das innere Rohr an seinem mit dem äußeren Rohr in Verbindung stehenden Endabschnitt eine größere Wandstärke als in seinem sich daran anschließenden mittleren Rohrabschnitt aufweist. Das innere Rohr ist an seinem mit dem äußeren Rohr in Verbindung stehenden Endabschnitt gestaucht.

Bezüglich der Vorteile des erfindungsgemäßen Verfahrens sei auf die obigen Ausführungen zu der erfindungsgemäßen Fahrzeugsicherheitseinrichtung verwiesen, da die Vorteile des erfindungsgemäßen Verfahrens denen der erfindungsgemäßen Fahrzeugsicherheitseinrichtung im Wesentlichen entsprechen.

Mit Blick auf eine feste Verbindung einer Anzündeinrichtung wird es als vorteilhaft angesehen, wenn die Anzündeinrichtung durch ein Spritzgussmaterial abschnittsweise im Inneren des Rohres gehalten wird. Vorzugsweise wird der Spritzgusskörper derart angespritzt, das sich ein innerer Abschnitt des Spritzgusskörpers in dem Rohr befindet und an der Innenseite des Rohres anliegt. Mit einem außerhalb des Rohrs befindlichen äußeren Abschnitt des Spritzgusskörpers wird vorzugsweise eine Hülse gebildet, die aus dem Rohr herausgeführte elektrische Anschlusselemente der Anzündeinrichtung seitlich umgibt.

Um eine formschlüssige Verbindung zwischen dem Spritzgusskörper und dem Rohr zu ermöglichen, wird es als vorteilhaft angesehen, wenn der Spritzgusskörper derart angespritzt wird, dass zwischen dem inneren Abschnitt des Spritzgusskörpers und dem äußeren Abschnitt des Spritzgusskörpers ein mittlerer Abschnitt angeordnet wird, dessen Durchmesser kleiner als der des inneren und des äußeren Abschnitts ist. Vorher wird hierzu vorzugsweise der Öffnungsdurchmesser des Rohrs am Rohrende reduziert. Nach Abschluss des Spritzvorgangs entspricht der Durchmesser des mittleren Abschnitts vorzugsweise dem reduzierten Öffnungsdurchmesser des Rohrs am Rohrende.

Der Verbrennungsraum des Gasgenerators wird vorzugsweise an seinem von der Anzündeinrichtung entfernten Ende mit einer Kappe verschlossen.

Die Kappe wird bevorzugt mit zumindest einem Aufreißabschnitt, insbesondere zumindest einer Aufreißnaht, versehen, der oder die nach einem Zünden des Treibstoffs aufgerissen wird und das von dem Treibstoff gebildete Gas aus dem Verbrennungsraum entweichen lässt. Zusätzlich oder alternativ kann die Kappe mit zumindest einer Kappenöffnung versehen werden, die nach einem Zünden des Treibstoffs das gebildete Gas aus dem Verbrennungsraum entweichen lässt.

Der Treibstoff wird vorzugsweise in einem separaten Treibstoffbehälter untergebracht, der in den Verbrennungsraum eingeführt ist.

Ein solcher Treibstoffbehälter wird vorzugsweise ganz oder zum Teil mit einer Folie gebildet, in der der Treibstoff eingeschweißt wird. Der Treibstoffbehälter kann beispielsweise durch ein Säckchen gebildet werden, das ganz oder zum Teil mit der Folie hergestellt wird.

Der die Folie aufweisende Treibstoffbehälter wird bevorzugt evakuiert, dabei wird sich die Folie vorzugsweise an die den Treibstoff enthaltenden Treibstofftabletten anlegen und somit die Lage der Treibstofftabletten relativ zueinander in dem Treibstoffbehälter fixieren.

Vorzugsweise wird in dem Treibstoffbehälter außerdem eine Frühzündladung untergebracht, deren Zündtemperatur kleiner ist als die des Treibstoffs. Die Position der Frühzündladung in dem Treibstoffbehälter wird vorzugsweise derart gewählt, dass die Frühzündladung im Bereich des von der Anzündeinrichtung entfernten Endes des Verbrennungsraumes liegt. Vorzugsweise wird die Frühzündladung an der Rohrinnenwand des Rohres und/oder neben der den Verbrennungsraum begrenzenden Kappe platziert, so dass sich zwischen Kappe und Frühzündladung vorzugsweise kein anderer Treibstoff befindet.

Mit der den Verbrennungsraum verschließenden Kappe des Gasgenerators wird vorzugsweise eine Wand des Treibstoffbehälters gebildet.

Besonders bevorzugt wird der Treibstoffbehälter durch die Kappe und die Folie gebildet. Der Treibstoff, die Frühzündladung und die Kappe werden vorzugsweise gemeinsam in der Folie eingeschweißt, und der durch die Kappe und die Folie begrenzte Innenraum wird vorzugsweise evakuiert, so dass die Folie an dem Treibstoff fest anliegt und die Lage des Treibstoffs fixiert. Die Fixierung erfolgt vorzugsweise derart, dass die Anzündladung an der Kappe anliegt.

Das Rohr des Gasgenerators und das Zuführungsrohr werden vorzugsweise mittels einer Pressverbindung miteinander verbunden.

Das Wandmaterial eines der beiden Rohre, nämlich des äußeren Rohres, wird vorzugsweise in mindestens eine vorgeprägte (z. B. um 360 Grad) umlaufende Nut des inneren Rohres unter Bildung eines Hinterschnitts eingepresst.

Vorzugsweise wird an mindestens drei, vorzugsweise sechs, voneinander getrennten Kreisbogenabschnitten das Wandmaterial des äußeren Rohres in die vorgeprägte umlaufende Nut des inneren Rohres eingeprägt. Die Kreisbogenabschnitte sind bevorzugt drehsymmetrisch am Umfang des äußeren Rohres angeordnet. Gemäß einer anderen bevorzugten Ausgestaltung ist vorgesehen, dass in die gesamte um 360 Grad umlaufende Nut des inneren Rohres Wandmaterial des äußeren Rohres eingepresst wird. Dabei wird vorzugsweise eine um 360 Grad umlaufende Nut auch in dem äußeren Rohr gebildet. Das Einpressen des Wandmaterials erfolgt vorzugsweise durch Rollen.

Erfindungsgemäß wird das innere Rohr an seinem mit dem äußeren Rohr in Verbindung stehenden Endabschnitt mit einer größeren Wandstärke als in seinem sich daran anschließenden mittleren Rohrabschnitt versehen. Erfindungsgemäß wird das innere Rohr an seinem mit dem äußeren Rohr in Verbindung stehenden Endabschnitt gestaucht, um die beschriebene Dickenerhöhung zu erreichen. Die Dickenerhöhung beträgt vorzugsweise zwischen 10% und 30% der normalen Wandstärke des inneren Rohres.

Um die Stabilität zu erhöhen, kann außerdem das innere Rohr an seinem Rohrende aufgeweitet sein. In dem Überlappungsbereich zwischen den beiden Rohrenden wird der Durchmesser des äußeren Rohres vorzugsweise an den Durchmesser des inneren Rohres angepasst, indem das äußere Rohr aufgepresst, vorzugsweise aufgerollt, wird.

Auch kann das äußere auf das innere Rohr aufgeschrumpft werden. Zusätzlich oder alternativ können das äußere und das innere Rohr durch eine Bajonettverbindung verbunden werden.

Das Wandmaterial des äußeren Rohres ist vorzugsweise in mindestens zwei parallele jeweils um 360 Grad umlaufende Nuten des inneren Rohres eingepresst.

Zusätzlich oder alternativ können das äußere und das innere Rohr durch zumindest einen Bolzen verbunden werden, der durch zwei gegenüberliegende Löcher in der Wand des äußeren Rohres und zwei mit diesen fluchtenden Löcher in der Wand des inneren Rohres hindurchgeführt wird. Der Bolzen kann an seinen Bolzenenden mit der Wand des äußeren Rohres vernietet werden.

Die Erfindung wird nachfolgend anhand von Ausführungsbeispielen näher erläutert; dabei zeigen beispielhaft:
- Figur 1: ein erstes Ausführungsbeispiel für einen Gasgenerator in einer Explosionsdarstellung, wobei der Gasgenerator eine Anzündeinrichtung aufweist, die von einem Spritzgusskörper an einem Rohrende eines Rohres des Gasgenerators gehalten wird,
- Figur 2: den Gasgenerator gemäß Figur 1 im montierten Zustand,
- Figur 3: die Ausgestaltung des Spritzgusskörpers beim Gasgenerator gemäß Figur 1 näher im Detail,
- Figur 4: ein Ausführungsbeispiel für eine Kappe, mit der der Verbrennungsraum des Gasgenerators gemäß Figur 1 verschlossen werden kann,
- Figur 5: ein Ausführungsbeispiel für einen Treibstoffbehälter, der bei dem Gasgenerator gemäß Figur 1 eingesetzt werden kann,
- Figur 6: ein Ausführungsbeispiel für eine Anbindung eines Zuführungsrohres an ein Rohr eines Gasgenerators im Querschnitt, wobei das Zuführungsrohr mit einer umlaufenden Nut versehen ist,
- Figur 7: die Verbindung zwischen dem Zuführungsrohr und dem Rohr des Gasgenerators gemäß Figur 6 in einer Sicht von außen,
- Figur 8: ein weiteres Ausführungsbeispiel für eine Verbindung zwischen einem Zuführungsrohr und einem Rohr eines Gasgenerators, wobei sowohl das Zuführungsrohr als auch das Rohr des Gasgenerators mit einer umlaufenden Nut versehen ist,
- Figur 9: ein weiteres Ausführungsbeispiel für eine Verbindung zwischen einem Zuführungsrohr und einem Rohr eines Gasgenerators, wobei das Zuführungsrohr endseitig aufgeweitet ist,
- Figur 10: ein weiteres Ausführungsbeispiel für eine Verbindung zwischen einem Zuführungsrohr und einem Rohr eines Gasgenerators, wobei sowohl das Zuführungsrohr als auch das Rohr des Gasgenerators jeweils mit zwei umlaufenden Nuten versehen ist,
- Figur 11: ein weiteres Ausführungsbeispiel für eine Verbindung zwischen einem Zuführungsrohr und einem Rohr eines Gasgenerators, wobei das Rohr des Gasgenerators auf das Zuführungsrohr aufgeschrumpft ist,
- Figur 12: ein weiteres Ausführungsbeispiel für eine Verbindung zwischen einem Zuführungsrohr und einem Rohr eines Gasgenerators, wobei die beiden Rohre mittels einer Bajonettverbindung miteinander verbunden sind, und
- Figuren 13-15: ein weiteres Ausführungsbeispiel für eine Verbindung zwischen einem Zuführungsrohr und einem Rohr eines Gasgenerators, wobei die Verbindung mittels zweier senkrecht aufeinander stehender Bolzen hergestellt wird.

In den Figuren werden der Übersicht halber für identische oder vergleichbare Komponenten stets dieselben Bezugszeichen verwendet.

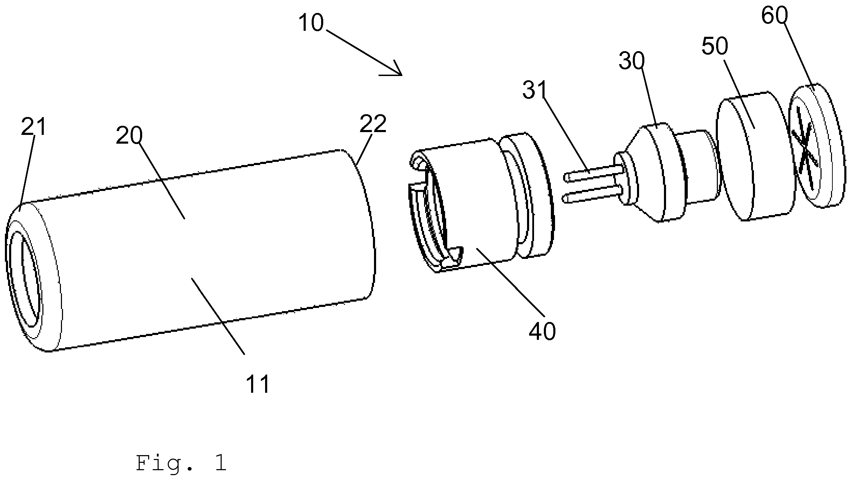

Die Figur 1 zeigt ein Ausführungsbeispiel für einen Gasgenerator 10 in einer Explosionsdarstellung. Man erkennt ein Rohr 20 des Gasgenerators 10, das nachfolgend auch Generatorrohr 20 genannt wird.

Ein erstes Rohrende 21 des Generatorrohres 20 ist verjüngt und weist einen geringeren Durchmesser auf als der übrige Bereich des Generatorrohres 20. So ist erkennbar, dass der Durchmesser eines zweiten Rohrendes 22 des Generatorrohres 20 größer ist als der Durchmesser des Generatorrohres 20 an seinem ersten Rohrende 21.

Die Figur 1 zeigt darüber hinaus eine Anzündeinrichtung 30, die im Bereich des ersten Rohrendes 21 in das Generatorrohr 20 eingesteckt und dort fixiert ist. Zur Fixierung der Anzündeinrichtung 30 am ersten Rohrende 21 ist ein Spritzgusskörper 40 vorgesehen, der die Anzündeinrichtung 30 zumindest näherungsweise mittig innerhalb des ersten Rohrendes 21 im Generatorrohr 20 hält.

Der Spritzgusskörper 40 wird hergestellt, nachdem die Anzündeinrichtung 30 innerhalb des Generatorrohres 20 positioniert ist. Durch Einspritzen eines Spritzgussmaterials in den Bereich des ersten Rohrendes 21 wird anschließend eine Fixierung der Anzündeinrichtung 30 innerhalb des Generatorrohres 20 durch die Ausbildung des Spritzgusskörpers 40 erreicht.

Die Figur 1 zeigt darüber hinaus elektrische Anschlusselemente 31 der Anzündeinrichtung 30, mit denen die Anzündeinrichtung 30 zwecks Zündung mit einer elektrischen Spannung bzw. einem elektrischen Strom beaufschlagt werden kann. Wie weiter unten noch näher gezeigt werden wird, werden die Anschlusselemente 31 durch den Spritzgusskörper 40 hülsenartig umgeben.

Die Figur 1 zeigt darüber hinaus Treibstoff 50, der in den Verbrennungsraum 11 des Gasgenerators 10 eingeführt ist. Der Treibstoff 50 befindet sich dabei räumlich zwischen der Anzündeinrichtung 30 und einer Kappe 60, die den Verbrennungsraum 11 in Richtung zum zweiten Rohrende 22 hin abschließt.

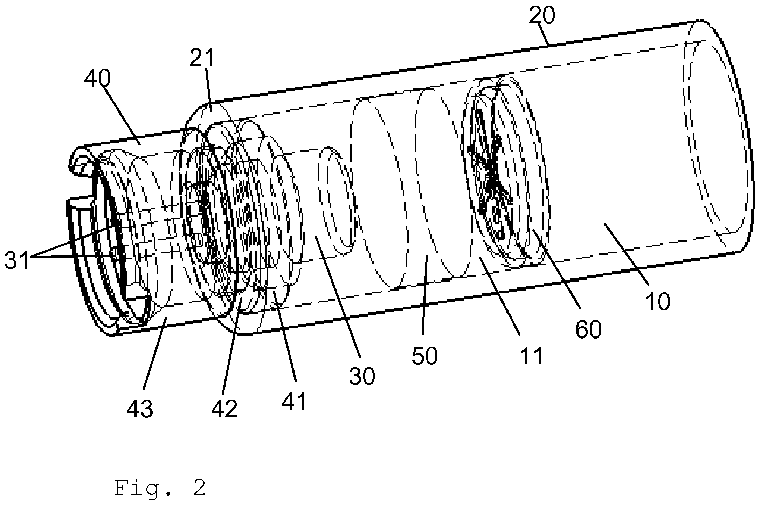

Die Figur 2 zeigt den Gasgenerator 10 gemäß Figur 1 im montierten Zustand. Man erkennt den Spritzgusskörper 40, der einen inneren Abschnitt 41, einen mittleren Abschnitt 42 sowie einen äußeren Abschnitt 43 umfasst. Der innere Abschnitt 41 des Spritzgusskörpers 40 befindet sich im Inneren des Generatorrohres 20 und fixiert die Anzündeinrichtung 30 innerhalb des Generatorrohres 20. Der innere Abschnitt 41 liegt hierzu an der Innenwand des Generatorrohres 20 und an der Außenwand der Anzündeinrichtung 30 an, füllt also den ringartigen Spalt zwischen der Innenwand des Generatorrohres 20 und der Außenwand der Anzündeinrichtung 30 und bildet eine Art Haltering, in dessen Innenbereich sich die Anzündeinrichtung 30 befindet.

Der mittlere Abschnitt 42 des Spritzgusskörpers 40 ist durch das verjüngte erste Rohrende 21 hindurchgeführt und fixiert somit die Lage des Spritzgusskörpers 40 relativ zu dem Generatorrohr 20.

Der äußere Abschnitt 43 des Spritzgusskörpers 40 ist hülsenartig geformt und bildet eine Schutzhülse für die beiden elektrischen Anschlusselemente 31 der Anzündeinrichtung 30. Die Ausgestaltung des äußeren Abschnitts 43 ist dabei derart gewählt, dass ein mechanisches Schnittstellenelement zum elektrischen Kontaktieren der elektrischen Anschlusselemente 31 aufgenommen werden kann. Derartige mechanische Schnittstellenelemente können mechanisch codiert sein, um eine fehlerhafte Verkabelung bzw. einen fehlerhaften elektrischen Anschluss der Anzündeinrichtung 30 an das Bordnetz eines Fahrzeugs zu vermeiden.

Die Figur 2 zeigt darüber hinaus die Positionierung des Treibstoffs 50 zwischen der Anzündeinrichtung 30 und der Kappe 60. Der Verbrennungsraum 11 des Gasgenerators 10 wird somit durch das erste Rohrende 21 und die Kappe 60 räumlich begrenzt.

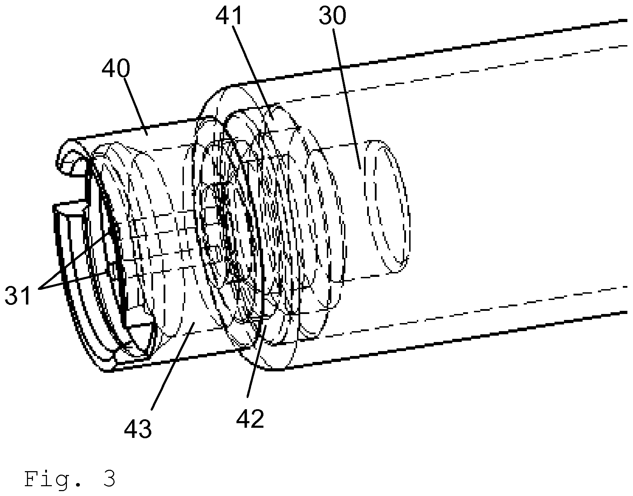

Die Figur 3 zeigt den Gasgenerator 10 gemäß Figur 1 näher im Detail. Man erkennt die beiden Anschlusselemente 31, die innerhalb des als Hülse ausgebildeten äußeren Abschnitts 43 des Spritzgusskörpers 40 positioniert sind. Darüber hinaus lassen sich auch die beiden anderen Abschnitte 41 und 42 des Spritzgusskörpers 40 gut erkennen.

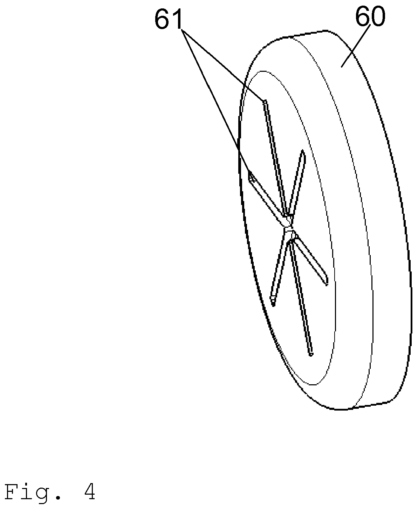

Die Figur 4 zeigt ein Ausführungsbeispiel für eine Kappe 60, die bei dem Gasgenerator gemäß Figur 1 zum Verschließen des Verbrennungsraumes eingesetzt werden kann. Die Kappe 60 ist mit Aufreißnähten 61 ausgestattet, die sternförmig radial nach außen verlaufen. Im Falle eines Überdrucks in dem Verbrennungsraum 11 gemäß Figur 2 wird das vom Treibstoff freigesetzte Gas die Aufreißnähte 61 aufreißen und ein Austreten des Gases durch die Kappe 60 hindurch ermöglichen.

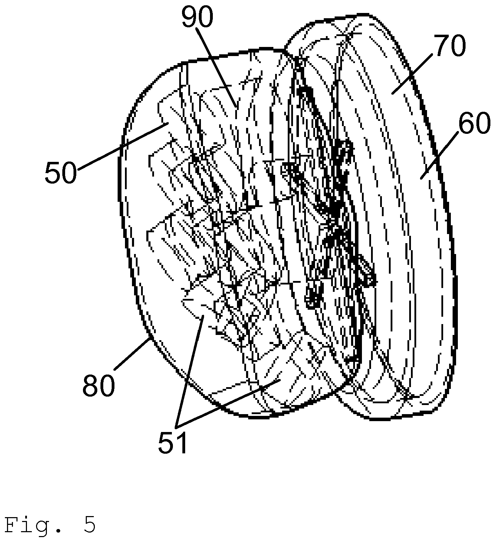

Bei dem Ausführungsbeispiel gemäß den Figuren 1 bis 4 sind der Treibstoff 50 und die Kappe 60 unverbunden. Als besonders vorteilhaft wird es jedoch angesehen, wenn die Kappe 60 einen Bestandteil eines Treibstoffbehälters 70 bildet, ein solches Ausführungsbeispiel zeigt die Figur 5.

In der Figur 5 sieht man einen Treibstoffbehälter 70, der neben der Kappe 60 eine Folie 80 aufweist. Die Folie 80 bildet vorzugsweise eine Art Sack, der den Treibstoff und die Kappe 60 einschließt bzw. umgibt. Bei der Folie 80 kann es sich beispielsweise um eine Kunststofffolie handeln.

Der Treibstoff 50 ist vorzugsweise in Form von Treibstofftabletten 51 zusammen mit einer Frühzündladung 90 im Inneren des Treibstoffbehälters 70 untergebracht. Die Positionierung der Frühzündladung 90 ist vorzugsweise derart gewählt, dass diese außen (z. B. unmittelbar an der Rohrinnenwand) anliegt und/oder unmittelbar an die Kappe 60 angrenzt, so dass sich keine Treibstofftabletten 51 zwischen der Frühzündladung 90 und der Kappe 60 und/oder der Rohrinnenwand befinden können. Um eine sichere Positionierung der Frühzündladung 90 und der Treibstofftabletten 51 innerhalb des Treibstoffbehälters 70 zu gewährleisten, wird es als vorteilhaft angesehen, wenn das Innere des Treibstoffbehälters 70 gasmäßig evakuiert wird bzw. das in dem Treibstoffbehälter 70 befindliche Gas abgesaugt wird. Durch ein solches Evakuieren wird erreicht, dass sich die Folie 80 fest an die Treibstofftabletten 51 und die Außenseite der Kappe 60 anlegen wird, so dass sich die Treibstofftabletten 51 nicht mehr frei innerhalb des Treibstoffbehälters 70 bewegen können. Durch eine feste Positionierung der Treibstofftabletten 51 wird außerdem gewährleistet, dass die Frühzündladung 90 nicht verrutschen kann und ihre Positionierung unmittelbar an der Kappe 60 und/oder außen an der Rohrinnenwand festgelegt bleibt.

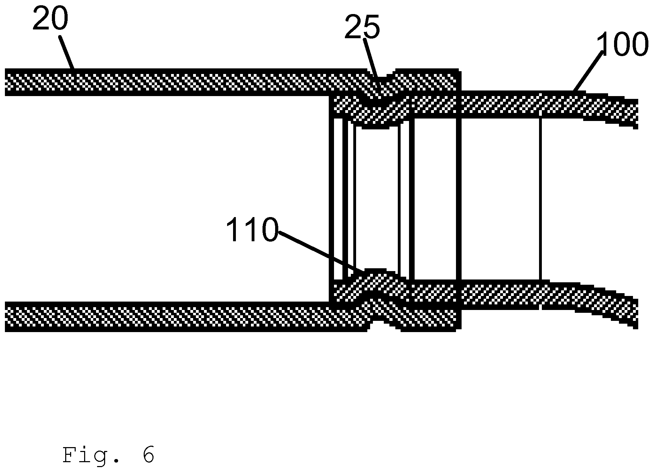

Die Figur 6 zeigt beispielhaft, wie ein Rohr (Generatorrohr) 20 eines Gasgenerators mit einem Zuführungsrohr 100 verbunden werden kann. Bei dem Zuführungsrohr 100 kann es sich beispielsweise um ein Rohr handeln, in dem Schubelemente untergebracht sind, die nach einem Zünden des Gasgenerators - angetrieben durch das Gas des Gasgenerators - in Bewegung gesetzt werden, um eine Antriebseinrichtung einer Fahrzeugsicherheitseinrichtung (z. B. einen Strafferantrieb für einen Gurt- oder Schlossstraffer oder dergleichen) in Gang zu setzen.

Die Figur 6 zeigt, dass das Zuführungsrohr 100 mit einer Nut 110 versehen ist, die vorgeprägt ist und um 360° um das Zuführungsrohr 100 umläuft.

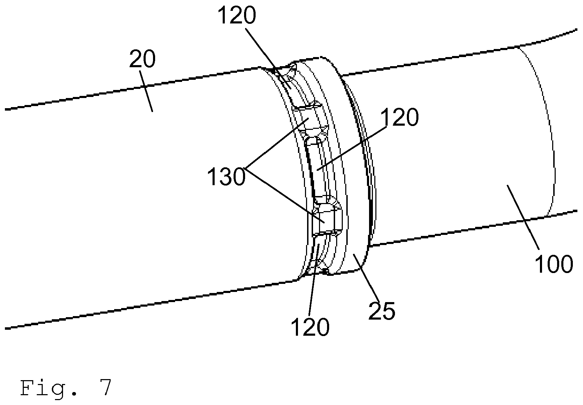

Das Generatorrohr 20 ist auf das Zuführungsrohr 100 aufgeschoben, so dass sich die beiden Rohre 20 und 100 abschnittsweise überlappen. Im Rahmen einer oder mehrerer Pressschritte wird zum Verbinden der beiden Rohre 20 und 100 Wandmaterial 25 des Generatorrohres 20 in die Nut 110 eingepresst. Ein solches Einpressen des Wandmaterials 25 kann beispielsweise mittels eines oder mehrerer Stempel erfolgen. Im Rahmen des Verpressens oder Stempelns wird das Wandmaterial 25 in mehreren voneinander getrennten Kreisbogenabschnitten in die Nut 110 eingepresst, wie dies beispielhaft die Figur 7 zeigt.

In der Figur 7 ist die Verbindung zwischen dem Zuführungsrohr 100 und dem Generatorrohr 20 in einer Sicht von der Seite gezeigt. Man erkennt Kreisbogenabschnitte 120, in denen das Wandmaterial 25 des Generatorrohres 20 in die Nut des Zuführungsrohres 100 eingepresst worden ist. Die Kreisbogenabschnitte 120 sind durch Segmente 130, bei denen kein Wandmaterial eingepresst ist, voneinander getrennt.

Zur Herstellung einer festen Verbindung zwischen dem Zuführungsrohr 100 und dem Generatorrohr 20 wird Wandmaterial 25 des Generatorrohres 20 vorzugsweise an sechs voneinander beabstandeten Kreisbogenabschnitten 120 in die Nut 110 eingepresst. Die Anordnung der Kreisbogenabschnitte 120 am Umfang des Zuführungsrohres 100 ist vorzugsweise drehsymmetrisch.

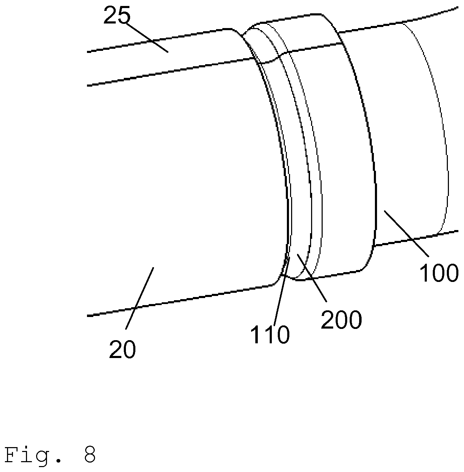

Die Figur 8 zeigt eine andere Ausgestaltung für eine Verbindung zwischen einem Zuführungsrohr 100 und einem Generatorrohr 20 eines Gasgenerators. Beim Ausführungsbeispiel gemäß Figur 8 ist in dem Zuführungsrohr 100 eine um 360° umlaufende Nut 110 vorgeprägt worden, wie dies auch bei dem Ausführungsbeispiel gemäß den Figuren 6 und 7 der Fall ist. Im Unterschied zu dem Ausführungsbeispiel gemäß den Figuren 6 und 7 ist bei dem Ausführungsbeispiel gemäß Figur 8 das Wandmaterial 25 des Generatorrohres 20 unter Bildung einer um 360 Grad umlaufenden, äußeren Nut 200 in die vorgeprägte innere Nut 110 eingedrückt. Die äußere Nut 200 umgibt die innere Nut 110 konzentrisch.

Das Eindrücken bzw. Einpressen des Wandmaterials 25 des Generatorrohres 20 erfolgt vorzugsweise im Rahmen eines Rollpressvorganges, um eine gleichmäßige Befestigung über den gesamten Umfang der beiden Rohre 20 und 100 zu gewährleisten.

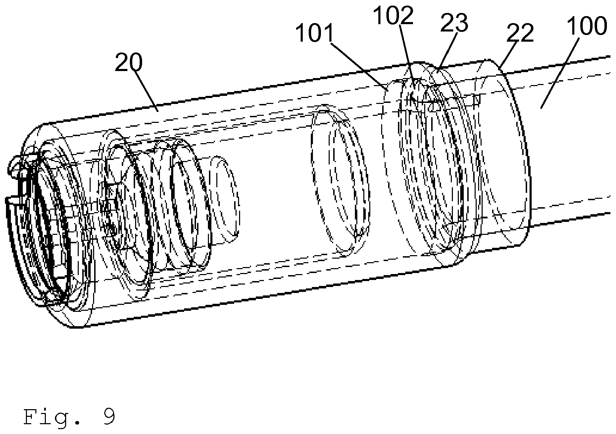

Die Figur 9 zeigt ein weiteres Ausführungsbeispiel für eine Verbindung zwischen einem Zuführungsrohr 100 und einem Generatorrohr 20 eines Gasgenerators. Bei diesem Ausführungsbeispiel ist das Zuführungsrohr 100 im Bereich seines Rohrendes 101 aufgeweitet, so dass ein aufgeweiteter Zuführungsrohrabschnitt 102 gebildet wird.

Auf den aufgeweiteten Zuführungsrohrabschnitt 102 ist das Generatorrohr 20 des Gasgenerators aufgeschoben und rohrendseitig derart aufgepresst, dass ein Endabschnitt 23 des Generatorrohres 20 fest auf dem Zuführungsrohr 100 aufliegt. Der Endabschnitt 23 liegt zwischen dem aufgeweiteten Zuführungsrohrabschnitt 102 und dem Rohrende 22 des Generatorrohres 20.

Das Aufpressen des Endabschnitts 23 auf dem Zuführungsrohr 100 hinter dem aufgeweiteten Zuführungsrohrabschnitt 102 kann beispielsweise im Rahmen eines Rollpressvorgangs erfolgen.

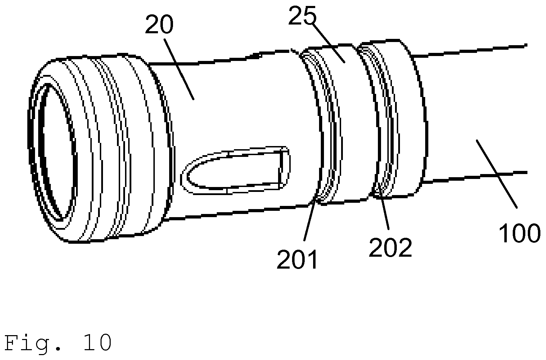

Die Figur 10 zeigt ein weiteres Ausführungsbeispiel für eine Verbindung zwischen einem Zuführungsrohr 100 und einem Generatorrohr 20 eines Gasgenerators. Beim Ausführungsbeispiel gemäß Figur 10 sind in dem Zuführungsrohr 100 zwei parallel zueinander um 360° umlaufende Nuten vorgeprägt, in die Wandmaterial 25 des Generatorrohres 20 - beispielsweise durch Rollen bzw. einen Rollpressschritt - eingepresst ist. Im Rahmen des Einpressens bzw. Rollens werden auf der Außenseite des Generatorrohres 20 zwei äußere Nuten 201 und 202 gebildet, die parallel zueinander verlaufen und konzentrisch zu den inneren vorgeprägten Nuten im Zuführungsrohr 100 sind. Die Ausgestaltung der Verbindung zwischen dem Zuführungsrohr 100 und dem Generatorrohr 20 entspricht somit dem Ausführungsbeispiel gemäß Figur 8 mit dem Unterschied, dass zwei Nutverbindungen anstelle nur einer einzigen Nutverbindung vorhanden sind.

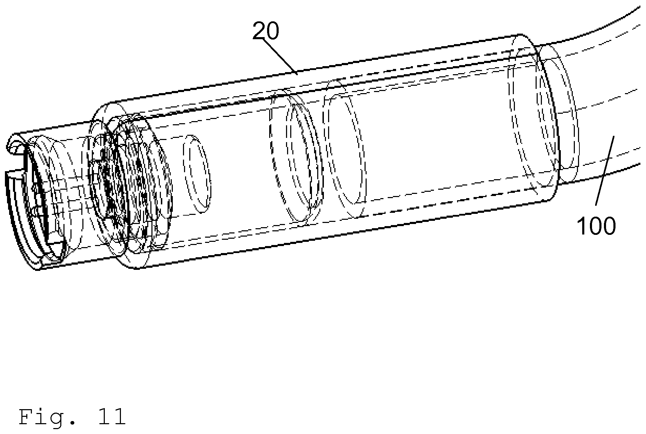

Die Figur 11 zeigt ein Ausführungsbeispiel für eine Verbindung zwischen einem Zuführungsrohr 100 und einem Generatorrohr 20 eines Gasgenerators, bei dem das Generatorrohr 20 auf das Zuführungsrohr 100 aufgeschrumpft ist. Ein solches Aufschrumpfen kann beispielsweise erfolgen, indem das Generatorrohr 20 erwärmt wird, so dass sich dessen Innendurchmesser aufweitet. Das in dieser Weise thermisch aufgeweitete Generatorrohr 20 wird dann auf das Zuführungsrohr 100 aufgesetzt, wobei sich eine dichte feste Verklemmung zwischen den beiden Rohren durch das Zusammenziehen des Generatorrohres 20 beim Abkühlen automatisch ergibt.

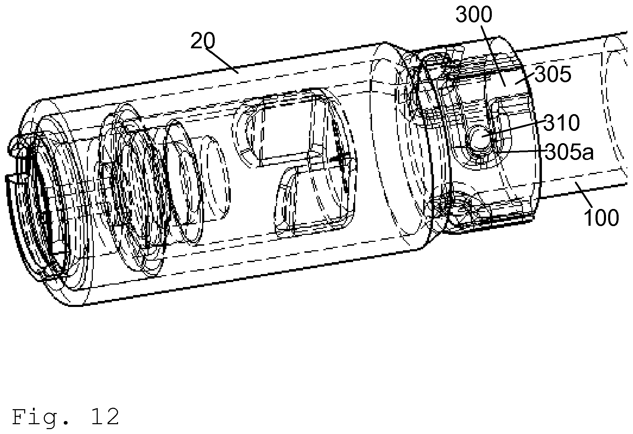

Die Figur 12 zeigt ein Ausführungsbeispiel für eine Verbindung zwischen einem Zuführungsrohr 100 und einem Generatorrohr 20 eines Gasgenerators, bei dem die beiden Rohre mittels einer Bajonettverbindung 300 miteinander verbunden sind. Zur Ausbildung dieser Bajonettverbindung 300 sind vorzugsweise auf der Innenwand des Generatorrohres 20 Führungskulissen 305 ausgebildet, die zum Führen von Stiften, Bolzen oder Bolzenstummeln 310 oder dergleichen geeignet sind. Die Stifte, Bolzen oder Bolzenstummel 310 sind vorzugsweise einstückig an dem Zuführungsrohr 100 angeformt.

Zur Herstellung der Bajonettverbindung 300 werden die Stifte, Bolzen oder Bolzenstummel 310 zunächst in axialer Richtung in die Führungskulissen 305 eingeführt und anschließend durch eine Rotationsbewegung um die Längsachse der beiden Rohre herum in Endabschnitten 305a der Führungskulisse 305 arretiert.

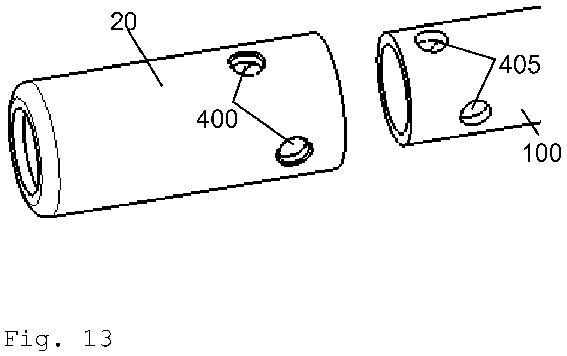

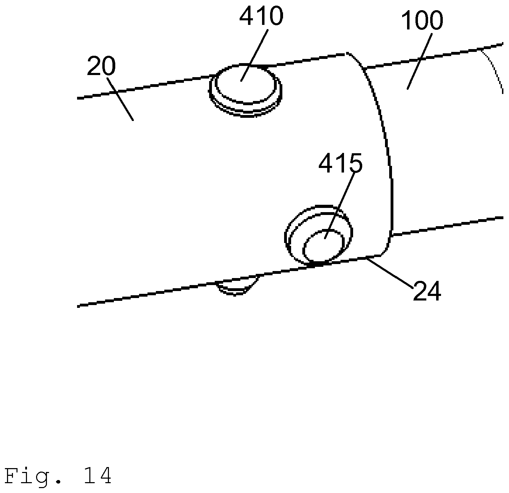

Die Figuren 13, 14 und 15 zeigen ein weiteres Ausführungsbeispiel für eine Verbindung zwischen einem Zuführungsrohr 100 und einem Generatorrohr 20 eines Gasgenerators. Bei diesem Ausführungsbeispiel sind das Generatorrohr 20 sowie das Zuführungsrohr 100 jeweils mit vier Löchern 400 bzw. 405 versehen. Die Löcher 400 und 405 bilden jeweils Löcherpaare mit gegenüberliegenden paarweise fluchtenden Löchern.

Wird das Zuführungsrohr 100 in das Generatorrohr 20 eingeführt, so lassen sich die Löcher 400 des Generatorrohres 20 in eine derartige relative Position zu den Löchern 405 des Zuführungsrohres 100 bringen, dass diese miteinander fluchten. Zur Verbindung des Zuführungsrohres 100 mit dem Generatorrohr 20 werden anschließend zwei Bolzen 410 und 415 durch die Löcher 400 und 405 hindurch gesteckt, und anschließend werden die Bolzen endseitig an der Außenseite 24 des Generatorrohres 20 vernietet.

Die Anordnung der beiden Bolzen 410 und 415 ist vorzugsweise derart gewählt, dass diese zumindest näherungsweise senkrecht aufeinander stehen.

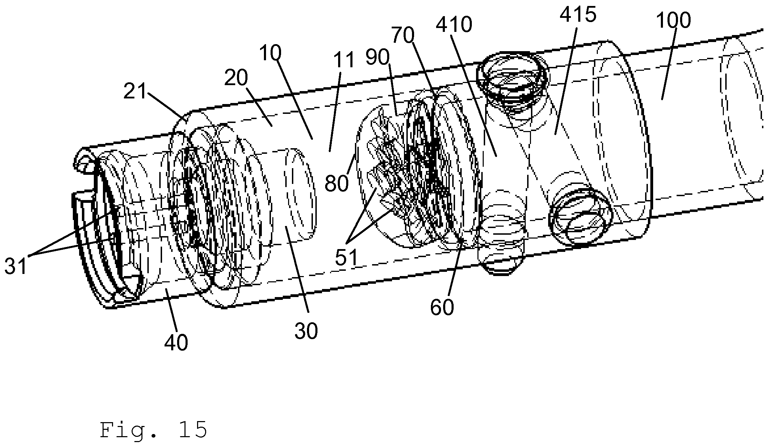

Die Figur 15 zeigt den fertigen Gasgenerator 10 mit Bolzenverbindung in einer dreidimensionalen Darstellung. Man erkennt die beiden Bolzen 410 und 415, die senkrecht aufeinander stehen und eine Verbindung zwischen dem Generatorrohr 20 und dem Zuführungsrohr 100 bewirken. Darüber hinaus lässt sich der Treibstoffbehälter 70 gemäß Figur 5 erkennen, bei dem die Treibstofftabletten 51 sowie die Frühzündladung 90 im Inneren einer evakuierten Folie 80 verschweißt sind.

Darüber hinaus zeigt die Figur 15 die Fixierung der Anzündeinrichtung 30 am ersten Rohrende 21 des Generatorrohres 20. Man erkennt den Spritzgusskörper 40, der die Anzündeinrichtung 30 in und am ersten Rohrende 21 hält. Darüber hinaus erkennt man, dass die elektrischen Anschlusselemente 31 der Anzündeinrichtung 30 durch eine Hülse umgeben werden, die durch den äußeren Abschnitt des Spritzgusskörpers 40 gebildet ist.

Bei den Ausführungsbeispielen gemäß den Figuren 1 bis 15 wird es als vorteilhaft angesehen, wenn zur Verbindung des Zuführungsrohres 100 mit dem Generatorrohr 20 das Rohrende 101 des Zuführungsrohres 100 endseitig aufgedickt wird, um eine Erhöhung der Stabilität im Verbindungsbereich zum Generatorrohr zu ermöglichen. Das Aufdicken des Rohrendes 101 des Zuführungsrohres 100 kann beispielsweise durch ein Stauchen erfolgen. Eine solche endseitige Aufdickung des Zuführungsrohres 100 durch Stauchen ist beispielsweise in den Figuren 6, 8 und 9 dargestellt.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Gasgenerator
- 11: Verbrennungsraum
- 20: Rohr
- 21: erstes Rohrende
- 22: zweites Rohrende
- 23: Endabschnitt
- 24: Außenseite
- 25: Wandmaterial
- 30: Anzündeinrichtung
- 31: Anschlusselement
- 40: Spritzgusskörper
- 41: innerer Abschnitt
- 42: mittlerer Abschnitt
- 43: äußerer Abschnitt
- 50: Treibstoff
- 51: Treibstofftablette
- 60: Kappe
- 61: Aufreißnaht
- 70: Treibstoffbehälter
- 80: Folie
- 90: Frühzündladung
- 100: Zuführungsrohr
- 101: Rohrende
- 102: Zuführungsrohrabschnitt
- 110: Nut
- 120: Kreisbogenabschnitt
- 130: Segment
- 200: Nut
- 201: Nut
- 202: Nut
- 300: Bajonettverbindung
- 305: Führungskulisse
- 305a: Endabschnitt
- 310: Stift, Bolzen, Bolzenstummel
- 400: Loch
- 405: Loch
- 410: Bolzen
- 415: Bolzen

## Patentansprüche

1. Fahrzeugsicherheitseinrichtung mit einem Gasgenerator, wobei der Gasgenerator (10) ein Rohr (20) aufweist und an dem Rohr des Gasgenerators ein Zuführungsrohr (100) angebracht ist,
wobei das Rohr (20) des Gasgenerators (10) und das Zuführungsrohr (100) ineinander geschoben sind und
wobei das innere Rohr an seinem mit dem äußeren Rohr in Verbindung stehenden Endabschnitt eine größere Wandstärke als in seinem sich daran anschließenden mittleren Rohrabschnitt aufweist,
**dadurch gekennzeichnet, dass**
das innere Rohr an seinem mit dem äußeren Rohr in Verbindung stehenden Endabschnitt gestaucht ist.

2. Fahrzeugsicherheitseinrichtung nach Anspruch 1,
**dadurch gekennzeichnet, dass**
die Dickenerhöhung durch Stauchung zwischen 10 % und 30 % der normalen Wandstärke des inneren Rohres beträgt.

3. Fahrzeugsicherheitseinrichtung nach einem der voranstehenden Ansprüche,
**dadurch gekennzeichnet, dass**
an dem Rohr (20) des Gasgenerators eine Anzündeinrichtung (30) mittels eines ein- oder angespritzten Spritzgusskörpers (40) fixiert ist.

4. Fahrzeugsicherheitseinrichtung nach einem der voranstehenden Ansprüche,
**dadurch gekennzeichnet, dass**
das Rohr (20) des Gasgenerators (10) und das Zuführungsrohr (100) mittels einer Pressverbindung verbunden sind, bei der Wandmaterial (25) eines der beiden Rohre, nämlich des äußeren Rohres in mindestens eine vorgeprägte umlaufende Nut (110) des inneren Rohres eingepresst ist.

5. Fahrzeugsicherheitseinrichtung nach Anspruch 4,
**dadurch gekennzeichnet, dass**
an mindestens drei, vorzugsweise sechs, voneinander getrennten Kreisbogenabschnitten (120) das Wandmaterial (25) des äußeren Rohres in die vorgeprägte umlaufende Nut (110) des inneren Rohres eingeprägt ist.

6. Fahrzeugsicherheitseinrichtung nach Anspruch 4,
**dadurch gekennzeichnet, dass**
in die gesamte um 360 Grad umlaufende Nut (110) des inneren Rohres Wandmaterial (25) des äußeren Rohres eingepresst ist, und zwar unter Bildung einer um 360 Grad umlaufenden konzentrischen Nut in dem äußeren Rohr.

7. Fahrzeugsicherheitseinrichtung nach einem der voranstehenden Ansprüche,
**dadurch gekennzeichnet, dass**
das innere Rohr an seinem Rohrende aufgeweitet ist.

8. Verfahren zum Herstellen eines Gasgenerators für eine Fahrzeugsicherheitseinrichtung,
wobei an einem der beiden Rohrenden (21) eines Rohrs (20) eines Gasgenerators (10) ein Zuführungsrohr (100) angebracht wird,
wobei das Rohr (20) des Gasgenerators (10) und das Zuführungsrohr (100) ineinander geschoben werden und
wobei das innere Rohr an seinem mit dem äußeren Rohr in Verbindung stehenden Endabschnitt eine größere Wandstärke als in seinem sich daran anschließenden mittleren Rohrabschnitt aufweist,
**dadurch gekennzeichnet, dass**
das innere Rohr an seinem mit dem äußeren Rohr in Verbindung stehenden Endabschnitt gestaucht ist.

9. Verfahren nach Anspruch 8,
**dadurch gekennzeichnet, dass**
die Dickenerhöhung durch Stauchung zwischen 10 % und 30 % der normalen Wandstärke des inneren Rohres beträgt.

## Claims

1. Vehicle safety device having a gas generator, the gas generator (10) having a pipe (20), and a feed pipe (100) being attached to the pipe of the gas generator, the pipe (20) of the gas generator (10) and the feed pipe (100) being pushed into one another, and the inner pipe having a greater wall thickness in its end section which is connected to the outer pipe than in its middle pipe section which adjoins it, **characterized in that** the inner pipe is upset-forged on its end section which is connected to the outer pipe.

2. Vehicle safety device according to Claim 1, **characterized in that** the increase in the thickness as a result of upset forging is between 10% and 30% of the normal wall thickness of the inner pipe.

3. Vehicle safety device according to either of the preceding claims, **characterized in that** an ignition device (30) is fixed on the pipe (20) of the gas generator by means of an embedded or moulded-on injection moulded body (40).

4. Vehicle safety device according to one of the preceding claims, **characterized in that** the pipe (20) of the gas generator (10) and the feed pipe (100) are connected by means of a press joint, in the case of which wall material (25) of one of the two pipes, namely of the outer pipe, is pressed into at least one prestamped circumferential groove (110) of the inner pipe.

5. Vehicle safety device according to Claim 4, **characterized in that** the wall material (25) of the outer pipe is stamped into the prestamped circumferential groove (110) of the inner pipe on at least three, preferably six, circular arc segments (120) which are separate from one another.

6. Vehicle safety device according to Claim 4, **characterized in that** wall material (25) of the outer pipe is pressed into the entire 360-degree circumferential groove (110) of the inner pipe, to be precise with the formation of a 360-degree circumferential concentric groove in the outer pipe.

7. Vehicle safety device according to one of the preceding claims, **characterized in that** the inner pipe is widened at its pipe end.

8. Method for producing a gas generator for a vehicle safety device, a feed pipe (100) being attached to one of the two pipe ends (21) of a pipe (20) of a gas generator (10), the pipe (20) of the gas generator (10) and the feed pipe (100) being pushed into one another, and the inner pipe having a greater wall thickness on its end section which is connected to the outer pipe than in its middle pipe section which adjoins it, **characterized in that** the inner pipe is upset-forged on its end section which is connected to the outer pipe.

9. Method according to Claim 8, **characterized in that** the increase in the thickness as a result of upset forging is between 10% and 30% of the normal wall thickness of the inner pipe.

## Revendications

1. Dispositif de sécurité de véhicule avec un générateur de gaz, dans lequel le générateur de gaz (10) présente un tube (20) et un tube d'alimentation (100) est monté sur le tube du générateur de gaz, dans lequel le tube (20) du générateur de gaz (10) et le tube d'alimentation (100) sont glissés l'un dans l'autre et dans lequel le tube intérieur présente à sa partie d'extrémité assemblée au tube extérieur une plus forte épaisseur de paroi que dans sa partie de tube moyenne se raccordant à celle-ci, **caractérisé en ce que** le tube intérieur est refoulé à sa partie d'extrémité assemblée au tube extérieur.

2. Dispositif de sécurité de véhicule selon la revendication 1, **caractérisé en ce que** l'augmentation d'épaisseur par refoulement vaut entre 10 % et 30 % de l'épaisseur de paroi normale du tube intérieur.

3. Dispositif de sécurité de véhicule selon l'une quelconque des revendications précédentes, **caractérisé en ce qu'**un dispositif d'amorçage (30) est fixé au tube (20) du générateur de gaz au moyen d'un corps moulé par injection (40) injecté à l'intérieur ou à l'extérieur.

4. Dispositif de sécurité de véhicule selon l'une quelconque des revendications précédentes, **caractérisé en ce que** le tube (20) du générateur de gaz (10) et le tube d'alimentation (100) sont assemblés par un assemblage à ajustement serré, dans lequel un matériau de paroi (25) d'un des deux tubes, à savoir du tube extérieur, est pressé dans au moins une rainure périphérique préformée (110) du tube intérieur.

5. Dispositif de sécurité de véhicule selon la revendication 4, **caractérisé en ce qu'**en au moins trois, de préférence six, parties d'arc de cercle (120) séparées l'une de l'autre le matériau de paroi (25) du tube extérieur est repoussé dans la rainure périphérique préformée (110) du tube intérieur.

6. Dispositif de sécurité de véhicule selon la revendication 4, **caractérisé en ce que** du matériau de paroi (25) du tube extérieur est repoussé dans toute la rainure périphérique à 360° (110) du tube intérieur, notamment en formant une rainure concentrique périphérique à 360° dans le tube extérieur.

7. Dispositif de sécurité de véhicule selon l'une quelconque des revendications précédentes, **caractérisé en ce que** le tube intérieur est évasé à son extrémité de tube.

8. Procédé de fabrication d'un générateur de gaz pour un dispositif de sécurité de véhicule selon l'une quelconque des revendications précédentes,
dans lequel on monte un tube d'alimentation (100) à une des deux extrémités (21) d'un tube (20) d'un générateur de gaz (10),
dans lequel on glisse l'un dans l'autre le tube (20) du générateur de gaz (10) et le tube d'alimentation (100), et dans lequel le tube intérieur présente à sa partie d'extrémité assemblée au tube extérieur une plus forte épaisseur de paroi que dans sa partie de tube moyenne se raccordant à celle-ci,
**caractérisé en ce que** le tube intérieur est refoulé à sa partie d'extrémité assemblée au tube extérieur.

9. Procédé selon la revendication 8, **caractérisé en ce que** l'augmentation d'épaisseur par refoulement vaut entre 10 % et 30 % de l'épaisseur de paroi normale du tube intérieur.
